(19) Europäisches Patentamt / European Patent Office / Office européen des brevets

(11) **EP 2 703 681 B1**

(12) **FASCICULE DE BREVET EUROPEEN**

(45) Date de publication et mention
de la délivrance du brevet:
**16.09.2015 Bulletin 2015/38**

(51) Int Cl.:
***F16D 48/06*** *(2006.01)*

(21) Numéro de dépôt: **13175792.4**

(22) Date de dépôt: **09.07.2013**

(54) **Procédé d'estimation en temps réel de la température d'éléments d'un dispositif d'embrayage à friction**

Echtzeit-Schätzverfahren der Temperatur von Elementen einer Reibungskupplungsvorrichtung

Method for real time estimation of the temperature of elements of a friction clutch device

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR

(30) Priorité: **04.09.2012 FR 1258216**

(43) Date de publication de la demande:
**05.03.2014 Bulletin 2014/10**

(73) Titulaire: **Valeo Embrayages**
**80009 Amiens Cedex 2 (FR)**

(72) Inventeurs:
• **MAUREL, Pascal**
**75009 PARIS (FR)**
• **RANDRIAZANAMPARANY, Vévé Roland**
**80470 AILLY SUR SOMME (FR)**
• **KRAEMER, Philippe**
**80080 AMIENS (FR)**
• **MAHI, Zakaria**
**75011 PARIS (FR)**

(74) Mandataire: **Tran, Chi-Hai**
**Valeo Transmissions**
**Propriété Intellectuelle**
**14 Avenue des Béguines**
**95892 Cergy Pontoise Cedex (FR)**

(56) Documents cités:
FR-A1- 2 936 034   US-A1- 2010 250 080
US-A1- 2011 257 838

**Description**

L'invention se rapporte à un procédé d'estimation en temps réel de la température d'éléments d'un dispositif d'embrayage à friction de véhicule automobile.

L'invention se rapporte plus particulièrement à un procédé d'estimation en temps réel de la température d'éléments d'un dispositif d'embrayage à friction de véhicule automobile qui est destiné à être mis en oeuvre par un calculateur numérique, le dispositif d'embrayage étant susceptible d'accoupler un arbre moteur et au moins un arbre d'entrée de boîte de vitesses, le dispositif d'embrayage comportant plusieurs composants monoblocs dont :

- au moins deux plateaux de pression destinés à serrer au moins un disque de friction entraîné en rotation par l'arbre moteur ;
- une cloche qui renferme les plateaux de pression ;

le procédé comportant :

- une première étape de collecte de valeurs de variables d'excitation thermique ;
- une deuxième étape de calcul de la puissance thermique dissipée par frottement ;
- une troisième étape d'estimation de variables d'état thermique du dispositif d'embrayage, l'estimation des variables d'état étant réalisée en intégrant au moins la somme du produit d'une matrice d'évolution par un vecteur d'état comportant les valeurs des variables d'état estimées précédemment et du produit d'une matrice d'excitation par un vecteur d'excitation comportant les valeurs des variables d'excitation collectées lors de la première étape.

Un tel procédé est connu du document FR 2 936 034 A1.

Lors d'un usage intensif du dispositif d'embrayage à friction, c'est-à-dire en cas de succession rapide de débrayage et d'embrayage, la chaleur produite par frottement n'a pas le temps d'être évacuée et les différents éléments du dispositif d'embrayage à friction, tels que les plateaux de pression ou les disques de friction, risquent de s'échauffer au-delà d'une température critique à laquelle le dispositif d'embrayage à friction est sujet à des dysfonctionnements, voire à des ruptures.

Ce problème d'échauffement est d'autant plus critique pour les dispositifs d'embrayage à friction équipés de deux disques de friction, appelés couramment "double embrayage", qui permettent d'entraîner en rotation alternativement ou simultanément deux arbres d'entrée de la boîte de vitesses. Dans certaines configurations de fonctionnement, les deux disques de friction sont en effet susceptibles de frotter simultanément contre les plateaux de pression associés. Dans ce cas, la puissance thermique susceptible d'être produite par un double embrayage est supérieure à la puissance thermique susceptible d'être produite par un dispositif d'embrayage simple.

En outre, le double embrayage est souvent utilisé dans les véhicules automobiles équipés d'une boîte de vitesses robotisée. Dans ce cas, la commande du dispositif d'embrayage à friction est automatisée.

La facilité d'utilisation de ce type de transmission peut amener un conducteur à utiliser intensivement le dispositif d'embrayage sur une longue durée, par exemple en immobilisant le véhicule sur une pente à l'aide du dispositif d'embrayage au lieu d'utiliser le frein à main ou à pied, ou encore en changeant de rapport de transmission à un rythme intensif.

Il est cependant très onéreux et parfois techniquement impossible de mesurer régulièrement la température des divers éléments du dispositif d'embrayage. Or, il est très avantageux de connaître l'évolution de la température de ces éléments à tout moment lors de l'utilisation du dispositif afin de prévoir ou d'empêcher d'éventuels dysfonctionnements.

On a déjà proposé d'utiliser un procédé fondé sur la mise en oeuvre d'un modèle mathématique par un calculateur 44 électronique pour simuler l'évolution de la température des différents composants en fonction de la mesure de certaines valeurs.

Un tel procédé permet d'estimer la température des éléments en fonction du couple moteur transmis par l'embrayage ainsi qu'en fonction de certaines mesures de température aisées à effectuer, telles que celle de la température du compartiment moteur ou encore la température ambiante.

Cependant, les procédés connus ne sont pas satisfaisants car les estimations en résultant ne sont pas suffisamment précises.

En outre ces procédés connus ne prennent pas en compte certains composants.

De plus ces procédés connus ne permettent pas d'évaluer la température en un point précis d'un composant.

Pour résoudre ce problème, l'invention propose un procédé du type décrit précédemment, **caractérisé en ce qu'**au moins un composant monobloc est discrétisé en au moins deux éléments distincts contigus, la température de chacun desdits éléments de discrétisation formant une variable d'état qui est estimée lors de la troisième étape.

Selon d'autres caractéristiques de l'invention :

- les termes de la matrice d'évolution sont calculés en prenant en considération la puissance thermique emmagasinée par les éléments de discrétisation en fonction de leur masse, la puissance thermique transmise à l'air environnant et la conduction thermique entre les deux éléments de discrétisation ;
- au moins un plateau de pression est discrétisé en au moins deux éléments de discrétisation ;
- un premier élément de discrétisation du plateau de pression est formé par la partie annulaire périphérique portant les faces de contact avec des garnitures de friction ;
- le plateau de pression comporte un moyeu central, un deuxième élément de discrétisation étant formé par le moyeu du plateau de pression ;
- un troisième élément de discrétisation du plateau de pression est formé par une partie annulaire de liaison entre la partie annulaire périphériqueet le moyeu du plateau de pression ;
- au moins un disque de friction est discrétisé en plusieurs éléments de discrétisation ;
- au moins un couvercle portant l'un des plateaux de pression est discrétisé en plusieurs éléments de discrétisation ;
- lors de la troisième étape et préalablement à l'opération d'intégration, à la somme du produit d'une matrice d'évolution par le vecteur d'état et du produit d'une matrice d'excitation par le vecteur d'excitation, on ajoute le produit d'une matrice de rayonnement par le vecteur d'état élevé à la puissance quatre, afin de prendre en compte le transfert de chaleur par rayonnement thermique entre chacun des éléments et l'air contenu dans la cloche, l'estimation des variables d'état étant réalisée en intégrant la somme ainsi obtenue ;
- un capteur thermique est agencé dans la cloche de manière à mesurer la température de l'air à l'intérieur de la cloche ;
- la température de l'air à l'intérieur de la cloche est une valeur qui est collectée lors de la première étape et qui forme une variable d'excitation thermique ;
- la troisième étape comporte, avant l'opération d'intégration, une opération de correction qui corrige l'estimation précédente des variables d'état en soustrayant le produit d'une matrice de correction par la différence entre la température mesurée de l'air à l'intérieur de la cloche et la température estimée de l'air à l'intérieur de la cloche ;
- le dispositif d'embrayage est un double embrayage qui comporte trois plateaux de pression et deux disques de friction susceptibles d'être serrés indépendamment l'un de l'autre entre les plateaux pour entraîner en rotation chacun un arbre associé d'entrée de la boîte de vitesses.

L'invention concerne aussi un procédé de pilotage d'un embrayage mettant en oeuvre le procédé d'estimation selon les enseignements de l'invention, caractérisé en ce qu'il comporte :

- une première étape de calcul d'un gradient de température du composant discrétisé à partir des températures estimées de chacun des éléments de discrétisation ;
- une deuxième étape de calcul des déformations mécaniques du composant discrétisé dues aux contraintes provoquées par le gradient de température.

Selon une autre caractéristique du procédé de pilotage, ce dernier comporte une troisième étape de modification de la commande du dispositif d'embrayage en fonction des déformations calculées.

D'autres caractéristiques et avantages apparaîtront à la lecture de la description détaillée qui va suivre pour la compréhension de laquelle on se reportera aux dessins annexés parmi lesquels :

- la figure 1 est une vue schématique qui représente un groupe motopropulseur équipé d'un moteur, d'une boîte de vitesses à deux arbres d'entrée, et un double embrayage à friction ;
- la figure 2 est un schéma-bloc qui représente un modèle de représentation des états thermiques du double embrayage de la figure 1 selon un premier mode de réalisation de l'invention ;
- la figure 3 est un schéma-bloc qui représente le procédé d'estimation en temps réel des températures des éléments du double embrayage réalisé selon les enseignements de l'invention en se basant sur le modèle de la figure 2 ;
- la figure 4 est une vue similaire à celle de la figure 2 qui représente un modèle de représentation des états thermiques du double embrayage de la figure 1 selon un quatrième mode de réalisation de l'invention.

Dans la suite de la description, des éléments ayant des fonctions identiques, analogues ou similaires seront désignés par des mêmes numéros de référence.

Dans la suite de la description, par convention, une variable "X" dont la valeur est estimée sera suivie d'un astérisque "X*".

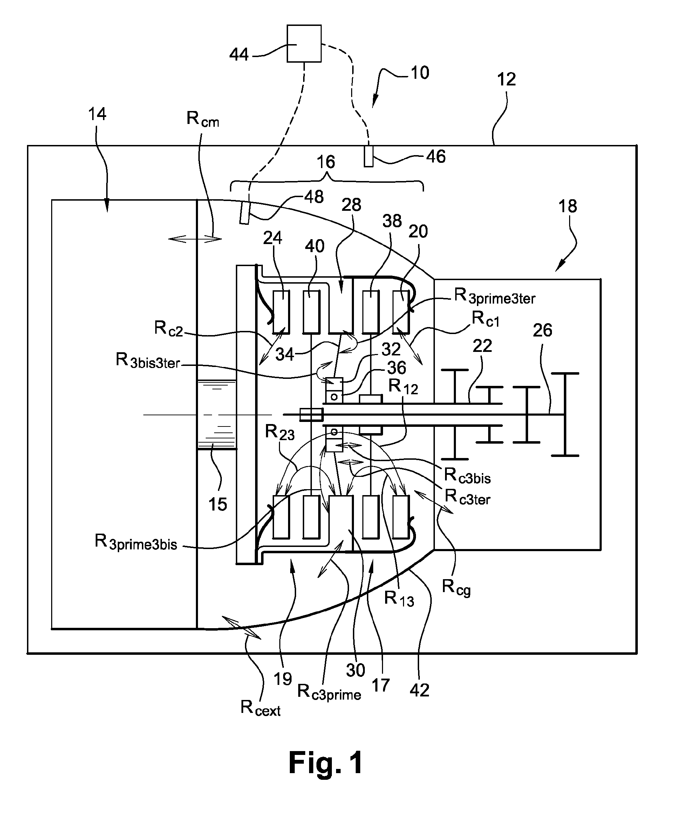

On a représenté de manière schématique à la figure 1 un groupe motopropulseur 10 de véhicule automobile qui est enfermé dans un compartiment moteur 12.

Le groupe motopropulseur 10 comporte principalement un moteur 14, un dispositif d'embrayage 16 et une boîte de vitesses 18.

Le moteur 14 est ici un moteur thermique, mais il peut aussi s'agir d'un moteur électrique ou d'un moteur hybride. Le moteur 14 comporte un arbre moteur 15 tournant dont la vitesse de rotation, indiquée par la référence "$\omega_m$" par la suite, est commandée. L'arbre moteur 15 est susceptible de transmettre un couple moteur "Tm" commandé à la chaîne de traction du véhicule.

Le dispositif d'embrayage 16 est ici un double embrayage à commande automatisée comportant un premier ensemble d'embrayage 17 et un deuxième ensemble d'embrayage 19 qui seront par la suite désignés premier embrayage 17 et deuxième embrayage 19. Chacun des premier et deuxième embrayages 17, 19 est susceptible d'accoupler respectivement l'arbre moteur 15 avec un premier arbre 22 d'entrée de boîte de vitesses et avec un deuxième arbre 26 d'entrée de boîte de vitesses.

Les deux arbres 22, 26 d'entrée sont agencés coaxialement à l'arbre 15 moteur. A cet effet, le premier arbre 22 d'entrée présente une forme tubulaire creuse de manière à loger à rotation le deuxième arbre 26 d'entrée. Un tel agencement est bien connu de l'homme du métier et ne sera donc pas décrit plus en détail par la suite.

Le dispositif 16 d'embrayage comporte plusieurs composants. Il comporte ainsi un premier plateau de pression 20 qui est solidaire en rotation de l'arbre moteur 15, un deuxième plateau de pression 24 qui est solidaire en rotation de l'arbre moteur 15, et un troisième plateau de pression 28 qui est aussi solidaire en rotation de l'arbre moteur 15.

Le troisième plateau de pression 28 est interposé axialement entre le premier plateau de pression 20 et le deuxième plateau de pression 24.

Comme représenté à la figure 1, tous les plateaux de pression 20, 24, 28 sont montés à rotation autour d'un même axe correspondant à l'axe de rotation de l'arbre moteur 15.

Le troisième plateau de pression 28 présente une partie annulaire périphérique 30 annulaire périphérique et un moyeu 32 central. La partie annulaire périphérique 30 est liée au moyeu 32 central par une partie 34 annulaire médiane de liaison qui est par exemple formée par des bras radiaux. Le troisième plateau de pression 28 est réalisé en une seule pièce de manière à former un composant monobloc.

Les premier et deuxième plateaux de pression 20, 24 sont montés coulissants par rapport à l'arbre moteur 15 tandis que le troisième plateau de pression 28 est monté fixe axialement par rapport à l'arbre moteur 15. Ainsi le troisième plateau de pression 28 est un plateau dit de réaction contre lequel les deux autres plateaux de pression 20, 24 sont susceptibles d'être serrés.

A cet effet, les premiers et deuxième plateaux de pression 20, 24 sont montés coulissant dans un couvercle qui présente une forme tubulaire et qui entoure extérieurement les plateaux de pression 20, 24, 28. Comme représenté à la figure 1, le troisième plateau de pression 28 est monté fixe sur le couvercle par sa périphérie extérieure.

Le troisième plateau de pression 28 fixe est ici porté à rotation par le premier arbre d'entrée 22 par l'intermédiaire d'un palier 36 de roulement qui est agencé dans le moyeu 32 du plateau 28.

Un premier disque de friction 38 et un deuxième disque de friction 40 sont interposés respectivement :

- axialement entre le premier plateau de pression 20 et la partie annulaire périphérique 30 du troisième plateau de pression 28 et ;
- axialement entre le deuxième plateau de pression 24 et la partie annulaire périphérique 30 du troisième plateau de pression 28.

Le premier disque de friction 38 est monté solidaire en rotation sur le premier arbre d'entrée 22 de la boîte de vitesses 18, et le deuxième disque de friction 40 est monté solidaire en rotation sur le deuxième arbre d'entrée 26 de la boîte de vitesses 18.

De manière connue, chaque disque de friction 38, 40 se présente sous la forme d'un voile radial. Chaque face axiale du voile est recouverte, à sa périphérie extérieure, par une garniture de friction. La garniture est destinée à être serrée axialement entre la partie annulaire périphérique 30 du troisième plateau 28 et la partie annulaire périphérique du plateau 20 ou 24 associé lorsque l'embrayage 17, 19 est dans un état embrayé.

Ainsi, le premier embrayage 17 est formé par le premier plateau de pression 20, le troisième plateau de pression 28 et le premier disque de friction 38, tandis que le deuxième embrayage 19 est formé par le deuxième plateau de pression 24, le troisième plateau de pression 28 et le deuxième disque de friction 40.

Les éléments du dispositif d'embrayage 16, notamment les plateaux de pression 20, 24, 28, sont enfermés dans une cloche 42 qui est fermée par une paroi du moteur 14.

Chaque embrayage 17, 19 est susceptible d'occuper un état embrayé ou un état débrayé. Ces états sont détaillés par la suite en référence au premier embrayage 17, cette description étant bien entendu applicable au deuxième embrayage 19.

Par la suite, les couples et les puissances associés au premier embrayage 17, respectivement au deuxième embrayage 19, seront suivis de l'indice "a", respectivement "b".

Dans l'état embrayé, le disque de friction 38 est serré entre les deux plateaux de pression 20, 28 associés pour accoupler l'arbre moteur 15 avec l'arbre d'entrée 22 associé. Ainsi, le premier embrayage 17 transmet depuis l'arbre moteur 15 jusqu'à l'arbre d'entrée 22 associé un couple qui sera par la suite appelé couple transmis "$Tc_a$".

L'état embrayé peut être réalisé sans glissement, c'est-à-dire que l'arbre moteur 15 tourne à la même vitesse que l'arbre d'entrée 22 associé. Dans ce cas, aucune puissance thermique n'est dissipée par frottement entre le disque de friction 38 et les plateaux de pression 20, 28 associés.

L'état embrayé peut aussi être réalisé avec glissement, c'est-à-dire que l'un des arbres moteur 15 ou d'entrée 22 tourne plus vite que l'autre. Le couple transmis par l'embrayage est en effet limité à une valeur haute appelée couple transmissible qui dépend notamment de la force de serrage des plateaux de pression 20, 28 l'un contre l'autre. Dans ce cas, une puissance thermique "$P_a$" est dissipée par frottement entre le disque de friction 40 et les plateaux de pression 20, 28 associés. Dans ce cas, on constate une brusque augmentation des températures :

- de la garniture de friction dudit disque de friction 40 et ;
- des faces des plateaux 20, 28 en contact avec la garniture, notamment de la partie annulaire périphérique 30 du troisième plateau de pression 28.

Le point de léchage, c'est-à-dire lorsque le disque de friction 38, 40 frotte contre les plateaux de pression 20, 28 associés mais sans qu'un couple ne soit transmis, est considéré comme un cas particulier de l'état embrayé avec glissement.

Dans l'état débrayé, les plateaux de pression 20, 28 sont écartés axialement de manière à ne pas toucher le disque de friction 38 associé. En l'absence de contact, la puissance thermique "$P_a$" dissipée par frottement par le premier embrayage 17 est nulle.

Le véhicule comporte en outre un calculateur 44 numérique, qui est formé par une unité électronique de commande. Comme cela sera décrit en détail par la suite, le calculateur 44 numérique est susceptible de mettre en oeuvre un procédé d'estimation de la température de certains éléments du dispositif 16 d'embrayage.

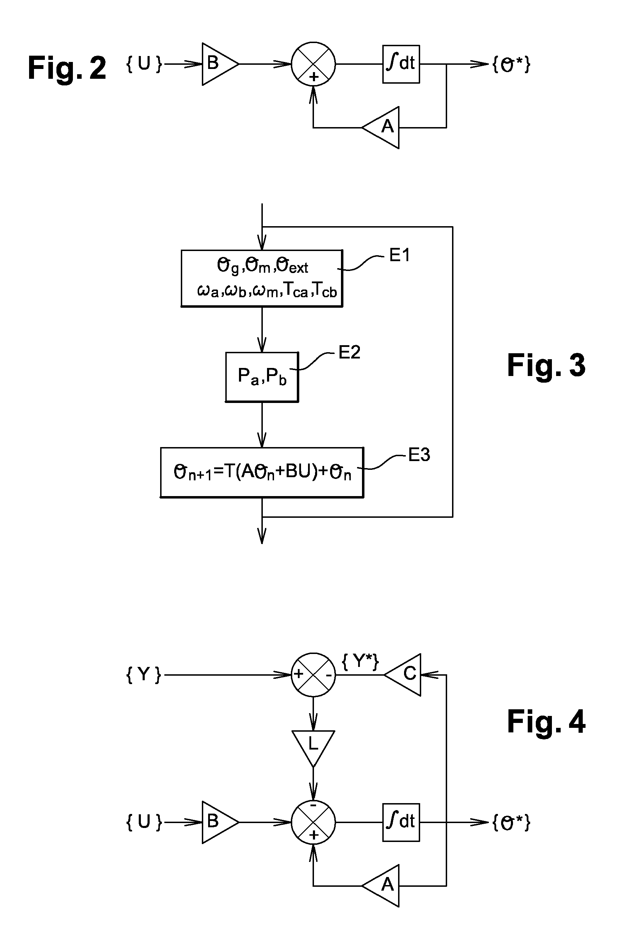

Il s'agit ici d'un procédé d'estimation mettant en oeuvre un modèle mathématique dynamique déterministe simulant les échanges thermiques entre les différents éléments du dispositif 16 d'embrayage, comme cela est représenté à la figure 2.

Le calculateur 44 électronique est susceptible de calculer, à partir de ce modèle mathématique, une estimation de variables d'état {θ*} représentatives de la température de certains éléments du dispositif 16 d'embrayage, à partir :

- de variables d'excitation données {U}, qui sont soit mesurées, soit estimées par d'autres procédés,
- et de l'estimation précédente des variables d'état {θ*}, en correspondance avec une matrice d'évolution [A].

On expose à présent la modélisation mathématique des échanges de chaleur permettant d'aboutir à l'estimation de la température de certains éléments du dispositif 16 d'embrayage.

Dans les procédés d'estimation connus qui sont mis en oeuvre par un calculateur 44 numérique embarqué à bord d'un véhicule, un élément est généralement formé d'un composant monobloc pris dans sa globalité, c'est ici le cas des premier et deuxième plateaux de pression 20, 24.

Néanmoins, ces procédés connus ne permettent pas d'estimer précisément la température locale en une zone précise d'un composant donné.

Selon un premier mode de réalisation de l'invention, pour obtenir la température de certains composants monoblocs en des zones précises, ces composants sont discrétisés en au moins deux éléments distincts contigus.

Pour différencier ces éléments obtenus par discrétisation des composants monobloc pris dans leur totalité, ils seront par la suite qualifiés d'éléments "de discrétisation". Par la suite, le terme "élément" utilisé sans qualificatif pourra désigner indifféremment un composant monobloc ou un élément de discrétisation.

Lorsqu'il est appliqué à un composant, le terme "discrétiser" est ici défini comme étant la division virtuelle d'un composant monobloc en deux éléments de discrétisation de par une surface de coupe déterminée. Ces deux éléments de discrétisation sont contigus, c'est-à-dire qu'ils sont considérés en contact l'un avec l'autre par leur surface de coupe.

Dans l'exemple représenté aux figures, le troisième plateau de pression 28 est discrétisé en trois éléments de discrétisation annulaires. Le premier élément de discrétisation est formé uniquement par la partie annulaire périphérique 30, le deuxième élément de discrétisation est formé uniquement par le moyeu 32 central et le troisième élément de discrétisation est formé par la partie 34 de liaison restante entre les deux premiers éléments de discrétisation. Cette discrétisation permet ainsi d'obtenir plus précisément :

- la température de la partie annulaire périphérique 30 qui est un indicateur assez précis de la température des garnitures de friction ;
- et la température du moyeu 32 afin de savoir si le palier 36 de roulement est soumis à des températures qui risquent d'en compromettre le fonctionnement.

Les flux de chaleur échangés en interne entre les différents éléments du dispositif d'embrayage 16 et en externe avec le moteur 14 et la boîte de vitesses 18 sont indiqués par des flèches à la figure 1.

Les flèches à sens unique "P$_a$" et "P$_b$" représentent respectivement la puissance fournie par l'environnement extérieur à chaque embrayage 17, 19, c'est-à-dire par le frottement entre chaque disque de friction 38, 40 et les plateaux de pression associés 20, 24, 28.

La puissance thermique, par exemple "P$_a$" pour le premier embrayage 17, dissipée par frottement est ici égale au produit entre le couple transmis "Tc$_a$" par le premier embrayage 17 et la vitesse de glissement $\omega_r$ du premier embrayage 17. La vitesse de glissement $\omega_r$ est définie comme la différence entre la vitesse de rotation "$\omega_m$" de l'arbre moteur 15 et la vitesse de rotation "$\omega_a$" du premier arbre d'entrée 22 associé.

La puissance thermique "P$_b$" dissipée par le deuxième embrayage 19 est obtenue par un calcul similaire faisant intervenir le deuxième arbre d'entrée 26 au lieu du premier.

Les flèches à double sens représentent les échanges thermiques par convection et/ou par conduction entre deux éléments voisins. Chaque flèche est indiquée par la référence "R" qui représente la résistance thermique entre les deux éléments à laquelle sont associés deux indices pour indiquer les éléments qui s'y rapportent. Ainsi, on utilisera les notations suivantes :

- "R$_{cm}$" représente la résistance thermique entre l'air contenu dans la cloche 42 et le moteur 14,
- "R$_{cg}$" représente la résistance thermique entre l'air contenu dans la cloche 42 et la boîte de vitesses 18,
- "R$_{cext}$" représente la résistance thermique entre l'air contenu dans la cloche 42 et l'air environnant contenu dans le compartiment moteur 12,
- "R$_{c1}$" représente la résistance thermique entre l'air contenu dans la cloche 42 et le premier plateau de pression 20,
- "R$_{c2}$" représente la résistance thermique entre l'air contenu dans la cloche 42 et le deuxième plateau de pression 24,
- "R$_{c3prime}$" représente la résistance thermique entre l'air contenu dans la cloche 42 et la partie annulaire périphérique 30 du troisième plateau de pression 28,
- "R$_{c3bis}$" représente la résistance thermique entre l'air contenu dans la cloche 42 et le moyeu 32 du troisième plateau de pression 28,
- "R$_{c3ter}$" représente la résistance thermique entre l'air contenu dans la cloche 42 et la partie 34 de liaison du troisième plateau de pression 28,
- "R$_{12}$" représente la résistance thermique entre le premier plateau de pression 20 et le deuxième plateau de pression 24,
- "R$_{13prime}$" représente la résistance thermique entre le premier plateau de pression 20 et la partie annulaire périphérique 30 du troisième plateau de pression 28,
- "R$_{13bis}$" représente la résistance thermique entre le premier plateau de pression 20 et le moyeu 32 du troisième plateau de pression 28,
- "R$_{13ter}$" représente la résistance thermique entre le premier plateau de pression 20 et la partie 34 de liaison du troisième plateau de pression 28,
- "R$_{23prime}$" représente la résistance thermique entre le deuxième plateau de pression 24 et la partie annulaire périphérique 30 du troisième plateau de pression 28,
- "R$_{23bis}$" représente la résistance thermique entre le deuxième plateau de pression 24 et le moyeu 32 du troisième plateau de pression 28,
- "R$_{23ter}$" représente la résistance thermique entre le deuxième plateau de pression 24 et la partie 34 de liaison du troisième plateau de pression 28.

A ces différentes résistances thermique de transfert par convection, il faut ajouter les résistances thermiques à la conduction entre deux éléments 30, 32, 34 de discrétisation, ainsi :

- "R$_{3prime3ter}$" représente la résistance thermique par conduction entre la partie annulaire périphérique 30 du troisième plateau de pression 28 et la partie 34 de liaison,
- "R$_{3bis3ter}$" représente la résistance thermique à la conduction entre la partie 34 de liaison et le moyeu 32 du troisième plateau de pression 28.

Les résistances thermiques à la conduction concernant les trois éléments de discrétisation 30, 32, 34 du troisième plateau de pression 28 sont calculées en prenant en compte :

- l'aire de contact entre lesdits éléments de discrétisation 30, 32, 34 contigus eux-mêmes ;
- la géométrie desdits éléments de discrétisation 30, 32, 34 ;
- et la conductivité thermique du matériau dans lequel est réalisé le composant ;
- la proportion de l'aire d'échange thermique que représente chacun desdits éléments de discrétisation 30, 32, 34 par rapport à la surface totale d'échange thermique avec l'air contenu dans la cloche.

Les différents éléments sont considérés comme étant des milieux homogènes et isotropes pour lesquels la résistance à la chaleur "R" est la même dans les deux sens d'échange.

Pour la suite de la description, la capacité calorifique du premier plateau de pression 20 sera notée "C1", et celle du deuxième plateau de pression 24 sera notée "C2". La capacité calorifique de l'air contenu dans la cloche 42 du dispositif d'embrayage 16 sera notée "Cc".

Etant donné que le troisième plateau de pression 28 est discrétisé en trois éléments de discrétisation 30, 32, 34, une capacité calorifique est attribuée à chacun des éléments de discrétisation en prenant en compte la proportion de la masse que représente chacun desdits éléments de discrétisation 30, 32, 34 par rapport à la masse totale du troisième plateau de pression 28 :

- "C3prime" représente la capacité calorifique de la partie annulaire périphérique 30 ;
- "C3bis" représente la capacité calorifique du moyeu 32 ;
- "C3ter" représente la capacité calorifique de la partie 34 de liaison.

Selon le premier principe de la thermodynamique de la conservation de l'énergie, la puissance thermique "$P_a$, $P_b$" apportée à un plateau de pression, par exemple le premier plateau pression 20, est égale à la puissance thermique emmagasinée par ledit plateau de pression 20 moins la quantité de chaleur échangée avec les éléments voisins, par exemple la cloche 42, comme indiqué dans l'équation "EQ1" suivante :

$$(EQ1) : \frac{P_a}{2} = C_1 \cdot \dot{\theta}_1 - \frac{\left(\theta_c - \theta_1\right)}{R_{c1}}$$

dans laquelle $\theta_1$ est la température du premier plateau de pression 20 ;
$\theta_c$ est la température de l'air contenu dans la cloche 42 ;
$\dot{\theta}_1$ est la dérivée par rapport au temps de la température du premier plateau de pression 20.

On considère dans ce modèle que la puissance thermique "$P_a$" est répartie équitablement entre le premier plateau de pression 20 et la partie annulaire périphérique 30 du troisième plateau de pression 28 du premier embrayage 17. Ainsi, la puissance thermique transmise au premier plateau de pression 20 est considérée comme étant la moitié de la puissance thermique "$P_a$" fournie au premier embrayage 17.

Selon une variante non représentée de l'invention, toute autre forme de répartition de puissance thermique peut être envisagée, par exemple en fonction des températures estimées par le modèle.

Le terme $C_1 \cdot \dot{\theta}_1$ représente la part de puissance thermique emmagasinée par le premier plateau de pression 20 provoquant son échauffement.

Le terme $-\dfrac{\left(\theta_c - \theta_1\right)}{R_{c1}}$ est la part de puissance restituée à l'air contenu dans la cloche 42 sous forme de chaleur.

Si on applique la relation précédente au cas du double embrayage de la figure 1, on obtient un système d'équations différentielles formant une équation d'état qui peut être formulée sous forme matricielle selon l'équation "EQ2" suivante :

$$(EQ2)\ \frac{d}{dt} \begin{Bmatrix} \theta_1^* \\ \theta_2^* \\ \theta_{3\,prime}^* \\ \theta_{3\,bis}^* \\ \theta_{3\,ter}^* \\ \theta_c^* \end{Bmatrix} = [A] \begin{Bmatrix} \theta_1^* \\ \theta_2^* \\ \theta_{3\,prime}^* \\ \theta_{3\,bis}^* \\ \theta_{3\,ter}^* \\ \theta_c^* \end{Bmatrix} + [B] \begin{Bmatrix} P_1 \\ P_2 \\ \theta_m \\ \theta_{gb} \\ \theta_{ext} \end{Bmatrix}$$

dans laquelle :

$$[A] = \begin{bmatrix} \dfrac{-1}{C_1}\left(\dfrac{1}{R_{1-all}}\right) & \dfrac{1}{C_1 R_{12}} & \dfrac{1}{C_1 R_{13\,prime}} & \dfrac{1}{C_1 R_{13bis}} & \dfrac{1}{C_1 R_{13ter}} & \dfrac{1}{C_1 R_{1c}} \\[2.5ex] \dfrac{1}{C_2 R_{21}} & \dfrac{-1}{C_2}\left(\dfrac{1}{R_{2-all}}\right) & \dfrac{1}{C_2 R_{23\,prime}} & \dfrac{1}{C_2 R_{23bis}} & \dfrac{1}{C_2 R_{23ter}} & \dfrac{1}{C_2 R_{2c}} \\[2.5ex] \dfrac{1}{C_{3prime} R_{13\,prime}} & \dfrac{1}{C_{3prime} R_{23\,prime}} & \dfrac{-1}{C_{3prime}}\left(\dfrac{1}{R_{3prime-all}}\right) & 0 & \dfrac{1}{C_{3prime} R_{3ter3prime}} & \dfrac{1}{C_{3prime} R_{c3prime}} \\[2.5ex] \dfrac{1}{C_{3bis} R_{13bis}} & \dfrac{1}{C_{3bis} R_{23bis}} & 0 & \dfrac{-1}{C_{3bis}}\left(\dfrac{1}{R_{3bis-all}}\right) & \dfrac{1}{C_{3bis} R_{3ter3bis}} & \dfrac{1}{C_{3bis} R_{c3bis}} \\[2.5ex] \dfrac{1}{C_{3ter} R_{13ter}} & \dfrac{1}{C_{3ter} R_{23ter}} & \dfrac{1}{C_{3ter} R_{3prime3ter}} & \dfrac{1}{C_{3ter} R_{3bis3ter}} & \dfrac{-1}{C_{3ter}}\left(\dfrac{1}{R_{3ter-all}}\right) & \dfrac{1}{C_{3ter} R_{c3ter}} \\[2.5ex] \dfrac{1}{C_c R_{c1}} & \dfrac{1}{C_c R_{c2}} & \dfrac{1}{C_c R_{c3prime}} & \dfrac{1}{C_c R_{c3bis}} & \dfrac{1}{C_c R_{c3ter}} & \dfrac{-1}{C_c}\left(\dfrac{1}{R_{c-all}}\right) \end{bmatrix}$$

$$[B] = \begin{bmatrix} \dfrac{1}{2C_1} & 0 & 0 & 0 & 0 \\[2ex] 0 & \dfrac{1}{2C_2} & 0 & 0 & 0 \\[2ex] \dfrac{1}{2C_{3prime}} & \dfrac{1}{2C_{3prime}} & 0 & 0 & 0 \\[2ex] 0 & 0 & 0 & 0 & 0 \\[2ex] 0 & 0 & 0 & 0 & 0 \\[2ex] 0 & 0 & \dfrac{1}{R_{cm}} & \dfrac{1}{R_{cgb}} & \dfrac{1}{R_{cext}} \end{bmatrix}$$

$\theta_1$ représente la température du premier plateau 20 ;

$\theta_2$ représente la température du deuxième plateau 24 ;

$\theta_{3prime}$ représente la température de la partie annulaire périphérique 30 du troisième plateau 28 ;

$\theta_{3bis}$ représente la température du moyeu 32 du troisième plateau 28 ;

$\theta_{3ter}$ représente la température de la partie 34 de liaison du troisième plateau 28 ;

$\theta_c$ est la température de l'air contenu dans la cloche 42.

Dans la matrice [A], les termes suivants ont été employés afin d'en rendre l'écriture plus compacte pour des raisons de mise en page :

$$\frac{1}{R_{1-all}} = \frac{1}{R_{1c}} + \frac{1}{R_{12}} + \frac{1}{R_{13\,prime}} + \frac{1}{R_{13bis}} + \frac{1}{R_{13ter}}$$

$$\frac{1}{R_{2-all}} = \frac{1}{R_{2c}} + \frac{1}{R_{12}} + \frac{1}{R_{23\,prime}} + \frac{1}{R_{23bis}} + \frac{1}{R_{23ter}}$$

$$\frac{1}{R_{3\,prime-all}} = \frac{1}{R_{c3\,prime}} + \frac{1}{R_{13\,prime}} + \frac{1}{R_{23\,prime}} + \frac{1}{R_{3\,prime3\,bis}} + \frac{1}{R_{3\,prime3\,ter}}$$

$$\frac{1}{R_{3\,bis-all}} = \frac{1}{R_{c3\,bis}} + \frac{1}{R_{13\,bis}} + \frac{1}{R_{23\,bis}} + \frac{1}{R_{3\,prime3\,bis}} + \frac{1}{R_{3\,bis3\,ter}}$$

$$\frac{1}{R_{3\,ter-all}} = \frac{1}{R_{c3\,ter}} + \frac{1}{R_{13\,ter}} + \frac{1}{R_{23\,ter}} + \frac{1}{R_{3\,prime3\,ter}} + \frac{1}{R_{3\,bis3\,ter}}$$

$$\frac{1}{R_{c-all}} = \frac{1}{R_{1c}} + \frac{1}{R_{c2}} + \frac{1}{R_{c3\,prime}} + \frac{1}{R_{c3\,bis}} + \frac{1}{R_{c3\,ter}} + \frac{1}{R_{cext}} + \frac{1}{R_{cgb}} + \frac{1}{R_{cm}}$$

En abrégé, et comme illustré à la figure 2, cette équation "EQ2" d'état à temps continu peut s'écrire de manière simplifiée selon l'équation "EQ3" suivante :

$$(EQ3) \quad \left\{ \frac{d\theta^*}{dt} \right\} = [A] \cdot \{\theta^*\} + [B] \cdot \{U\}$$

- dans laquelle $\{\theta^*\}$ est un vecteur d'état thermique du dispositif d'embrayage 16 dans lequel sont stockées les estimations des températures $\theta^*_1$, $\theta^*_2$ des premier et deuxième plateaux de pression 20, 24, les estimations des températures $\theta^*_{3prime}$, $\theta^*_{3bis}$, $\theta^*_{3ter}$ des trois éléments 30, 32, 34 de discrétisation du troisième plateau de pression 28, et l'estimation de la température $\theta^*_c$ de l'air contenu dans la cloche 42 ;
- dans laquelle $\{U\}$ est un vecteur d'excitation dans lequel sont stockées les influences extérieures au dispositif d'embrayage 16 telles que les puissances thermiques dissipées "$P_a$" et "$P_b$" et les températures du moteur "$\theta_m$", de la boîte de vitesses "$\theta_g$" et de l'air environnant "$\theta_{ext}$" contenu dans le compartiment moteur 12 ;
- dans laquelle [A] est une matrice dite d'évolution du système d'états ;
- et dans laquelle [B] est une matrice d'excitation ou de commande du système d'états.

Cette équation d'état permet de simuler l'évolution des températures du vecteur d'état $\{\theta^*\}$ du dispositif d'embrayage 16.

Le modèle thermique présenté est ainsi formulé mathématiquement sous la forme d'une équation d'état à temps continu dans laquelle la dérivée par rapport au temps du vecteur d'état $\{d\theta^*/dt\}$ est obtenue en fonction du vecteur d'état $\{\theta^*\}$ et du vecteur d'excitation $\{U\}$.

Les variables contenues dans le vecteur d'excitation $\{U\}$ sont des mesures instantanées ou des estimations obtenues à partir de mesures instantanées qui permettent l'estimation du vecteur d'état $\{\theta^*\}$ à chaque instant "t".

Le vecteur d'excitation $\{U\}$ est déduit soit directement à partir des mesures des diverses puissances et températures, soit de leur estimation par un autre procédé. Par exemple la puissance instantanée "$P_a$, $P_b$" dissipée dans un embrayage 17, 19 peut être déduite de la vitesse de glissement instantanée "$\omega_r$" de l'embrayage, 17, 19 mesurée par des capteurs sur le moteur 14 et l'arbre d'entrée 22, 26 associé, multiplié par le couple transmis "$Tc_a$, $Tc_b$" de l'embrayage 17, 19.

Le couple transmis "$Tc_a$, $Tc_b$" de l'embrayage 17, 19 peut être estimé par un observateur d'état dynamique (non représenté) de la chaîne de transmission du véhicule automobile.

Certaines ou toutes les températures du vecteur d'excitation $\{U\}$, c'est-à-dire les températures environnantes "$\theta_{ext}$", du moteur "$\theta_m$" et/ou de la boite de vitesses "$\theta_g$", peuvent être directement mesurées par des capteurs adaptés agencés dans le groupe motopropulseur 10 de manière adéquate.

On a par exemple représenté un capteur 46 de température qui est agencé dans le compartiment moteur 12 de manière à communiquer au calculateur 44 numérique un signal représentatif de la température du compartiment moteur "$\theta_{ext}$".

Selon une variante, au moins une température du vecteur d'excitation {U} peut aussi être estimée à partir d'autres grandeurs physiques et de la connaissance de la relation de ces grandeurs physiques avec ladite température.

Les matrices d'évolution [A] et d'excitation [B] sont des matrices dont les termes décrivent la nature des échanges thermiques entre les éléments. Les termes dépendent des caractéristiques thermiques des différents éléments tels que les capacités calorifiques et les résistances thermiques. Dans l'exemple décrit ici, les termes des matrices d'évolution [A] et d'excitation [B] sont calculés selon le premier principe de la thermodynamique comme expliqué précédemment. Les termes sont ici invariants.

En variante, au moins certains termes des matrices [A] et/ou [B] sont variables en fonction de paramètres estimés ou mesurés décrivant l'état de fonctionnement du véhicule, tels que la vitesse de rotation "$\omega_m$" du moteur 14, le rapport de transmission engagé dans la boîte de vitesses 18, la vitesse véhicule, la température ambiante "$\theta_{amb}$" à l'extérieur du compartiment moteur 12, voire même des valeurs du vecteur d'état {$\theta$*} lui-même.

Le calculateur 44 numérique (non représenté) embarqué à bord du véhicule est destiné à mettre en oeuvre le procédé d'estimation utilisant ce modèle mathématique pour permettre d'estimer à tout moment les valeurs du vecteur d'état {$\theta$*} afin d'éviter que le dispositif d'embrayage 16 ne soit endommagé par surchauffe.

Pour pouvoir utiliser ce modèle dans un calculateur 44 numérique, l'équation d'état "EQ2" précédente est discrétisée pour passer d'une équation d'état à temps continu à une équation d'état à temps échantillonné. Il existe plusieurs méthodes de discrétisation dont les plus connues sont Euler explicite et Tustin.

La transformée d'Euler explicite conduit à poser l'équation "EQ4" suivante :

$$\dot{\theta} = \frac{\theta_{n+1} - \theta_n}{T}$$

(EQ4)

"T" étant la période d'échantillonnage utilisée pour réaliser l'intégration de l'équation d'état dans le calculateur 44 numérique. Elle correspond à la fréquence de rafraîchissement des informations du vecteur d'excitation {U} et par conséquent à la fréquence de rafraîchissement des informations du vecteur d'état {$\theta$*}.

Pour la suite de la description, on notera {$\theta$*}$_t$ le vecteur d'état estimé au temps "t".

Le calculateur 44 numérique mettant en oeuvre ces équations d'état à temps échantillonné est donc capable de calculer les températures dans le dispositif d'embrayage 16 à l'instant suivant "t+1".

Le procédé mis en oeuvre par le calculateur 44 numérique est représenté à la figure 3.

Ainsi, le calculateur 44 est susceptible de mettre en oeuvre à chaque itération une première étape "E1" de collecte de valeurs de variables d'excitation thermique du vecteur d'excitation {U}, telles que les températures du moteur "$\theta_m$", de la boîte de vitesses "$\theta_g$" et de l'air environnant "$\theta_{ext}$" à l'intérieur de la cloche 42 du dispositif d'embrayage 16, ainsi que les vitesses de rotation "$\omega_m$, $\omega_a$, $\omega_b$" de l'arbre moteur 15 et des arbres d'entrée 22, 26, et les couples transmis "$Tc_a$, $Tc_b$" par chaque embrayage 17, 19 du dispositif d'embrayage 16.

Puis, lors d'une deuxième étape "E2", les puissances thermiques "$P_a$, $P_b$" dissipées par frottement par chacun des embrayage 17, 19 sont calculées à partir de la différence de vitesses de rotation entre l'arbre moteur 15 "$\omega_m$" et de chaque arbre d'entrée "$\omega_a$, $\omega_b$" correspondant ainsi que des couples transmis "$Tc_a$, $Tc_b$".

Ensuite, lors d'une troisième étape "E3" d'estimation de variables d'état thermique du vecteur d'état {$\theta$*}$_t$ du dispositif d'embrayage 16, l'estimation des variables d'état pour le temps actuel "t" est réalisée en intégrant, au moyen d'un intégrateur, la somme du produit de la matrice d'évolution [A] par le vecteur d'état {$\theta$}$_{t-1}$ comportant les valeurs des variables d'état estimées au temps précédent "t-1" et du produit de la matrice de commande [B] par le vecteur {U}$_t$ d'excitation comportant les valeurs des variables d'excitation à l'instant "t" collectées lors de la première étape "E1". Ces opérations de calcul seront par la suite appelées "calcul de simulation".

La réalisation de ces trois étapes successive forme un cycle à l'issu duquel on obtient une estimation des températures à un temps "t". Le procédé est réitéré à l'issu de chaque cycle pour estimer les températures au temps "t+1". La durée de chaque cycle est égale à la période d'échantillonnage "T" définie précédemment.

Le procédé ainsi mis en oeuvre par le calculateur 44 permet d'obtenir une estimation assez précise des températures en différents endroits du troisième plateau de pression 28. Il est notamment possible de connaître la température de la partie annulaire périphérique 30 et celle du moyeu 32.

Ceci permet tout d'abord de surveiller la température du moyeu 32 qui est très proche de la température du palier 36 de roulement. Ceci permet d'éviter la détérioration du palier 36 de roulement en mettant en oeuvre une procédure de régulation de la température en cas de surchauffe.

En variante non représentée, il est possible de discrétiser le troisième plateau de pression en deux ou plus de trois éléments de discrétisation. Pour obtenir des températures d'autres éléments discrétisés, il est ainsi possible de discrétiser la partie annulaire périphérique en deux parties par un plan de coupe axial. Ceci permet d'obtenir la température de la face de la partie annulaire périphérique qui est agencée en vis-à-vis du premier disque de friction 38, d'une part, et la température de la face de la partie annulaire périphérique qui est agencée en vis-à-vis du deuxième disque de friction 40, d'autre part.

Ceci permet par exemple de surveiller la température de la garniture de friction pour éviter sa détérioration.

Ceci permet aussi de définir au mieux le coefficient de frottement de la garniture contre la partie annulaire périphérique 30. Ce coefficient est en effet dépendant de la température de la garniture de friction. La variation du coefficient permet à son tour de définir différents paramètres, tel que le couple transmissible par l'embrayage. Selon une autre variante non représentée de l'invention, le couvercle est discrétisé en plusieurs éléments de discrétisation contigus qui sont choisis de manière à connaître le gradient de température entre les différents éléments de discrétisation du couvercle. Le gradient de température ainsi estimé par la mise en oeuvre de ce modèle par le calculateur permet de déterminer approximativement les déformations du couvercle dues à la dilatation thermique. De telles déformations ont notamment une incidence sur la position des différents éléments mobiles qui sont portés par le couvercle, telles que des fourchettes d'actionnement. La connaissance de ces déformations permet par exemple de modifier la loi de commande du dispositif d'embrayage en compensant les déplacements nécessaires pour obtenir un serrage déterminé des disques de friction, ou encore de déclencher des mesures de protection limitant la puissance thermique dissipée afin d'éviter des déformations trop importantes du couvercle.

Ainsi, selon cette variante, un procédé de pilotage du dispositif d'embrayage comporte :

- une première étape de calcul, par le calculateur, du gradient de température du composant discrétisé, ici le couvercle, à partir des températures estimées de chacun des éléments de discrétisation ;
- une deuxième étape de calcul, par le calculateur, des déformations mécaniques du composant discrétisé dues aux contraintes provoquées par le gradient de température ;
- une troisième étape de modification de la commande du dispositif d'embrayage en fonction des déformations calculées.

Le calculateur modifie ainsi, en fonction de la déformation calculée, plusieurs paramètres de commande, notamment le point de débrayage, le point de prise de couple, le point garantissant la transmission du couple moteur maximal, la forme de la caractéristique du couple transmis par rapport à la position des plateaux de pression.

Cette variante permet aussi de déclencher un fonctionnement en mode dégradé du dispositif d'embrayage lorsque la déformation risque d'entraîner un endommagement de certains composants du dispositif.

Selon encore une autre variante non représentée de l'invention, le modèle thermique mis en oeuvre par le calculateur prend en compte le transfert de chaleur entre les disques de friction et les autres composants du dispositif d'embrayage. Les disques de friction sont chacun discrétisés en deux éléments de discrétisation. Un premier élément de discrétisation annulaire comporte la garniture de friction tandis qu'un deuxième élément de discrétisation comporte le voile intérieur aux garnitures. La connaissance de la température des garnitures permet d'en déduire leur coefficient de frottement, tandis que la connaissance de la température du voile permet de déduire la déformation du disque par dilatation thermique. Comme expliqué précédemment, ceci permet de pouvoir adapter précisément le pilotage de l'embrayage et/ou de mettre en oeuvre un procédé de protection limitant la dissipation thermique dans le dispositif d'embrayage.

On décrit à présent un deuxième mode de réalisation de l'invention.

On a constaté que le modèle thermique décrit au premier mode de réalisation ne permettait pas d'estimer de manière fiable l'évolution des températures des différents composants du dispositif 16 d'embrayage lorsque le moteur du véhicule est à l'arrêt.

De nombreux véhicules sont équipés d'un système dit "Start and Stop" qui coupe automatiquement le moteur lorsque le véhicule ne roule pas, par exemple lorsqu'il est arrêté à un feu rouge. Le même système comporte des moyens pour redémarrer automatiquement le moteur lorsque le conducteur sollicite un redémarrage, par exemple par appui sur une pédale d'accélération du véhicule.

Sur de tels véhicules, les arrêts du moteur sont très fréquents. Le manque de fiabilité des estimations de température, peut être préjudiciable au fonctionnement du dispositif d'embrayage. En cas de sous estimation de leur température, certains composants peuvent être endommagés, tandis qu'en cas de surestimation de la température, un procédé de protection peut être déclenché intempestivement.

Pour résoudre ce problème, l'invention propose de compléter le procédé décrit au premier mode de réalisation en prenant en compte le phénomène de rayonnement thermique des différents éléments du dispositif 16 d'embrayage.

On reprend l'exemple développé dans le premier mode de réalisation pour donner un exemple de réalisation de ce deuxième mode de réalisation.

En plus des échanges thermiques par convection et/ou par conduction entre deux éléments voisins, les flèches à double sens de la figure 1 représentent aussi les échanges thermiques par rayonnement. Tout comme on a défini les résistances thermiques, on définit des coefficients d'échange par rayonnement qui portent la référence "λ". L'échange thermique par rayonnement a lieu entre l'air contenu dans la cloche 42 et un élément. On associe à la référence "λ" l'indice "c" de l'air et l'indice de l'élément en question pour indiquer les éléments qui s'y rapportent. Ainsi, on utilisera les notations suivantes :

- "$\lambda_{cm}$" représente le coefficient d'échange par rayonnement entre l'air contenu dans la cloche 42 et le moteur 14,
- "$\lambda_{cg}$" représente le coefficient d'échange par rayonnement entre l'air contenu dans la cloche 42 et la boîte de vitesses 18,
- "$\lambda_{cext}$" représente le coefficient d'échange par rayonnement entre l'air contenu dans la cloche 42 et l'air environnant contenu dans le compartiment moteur 12,
- "$\lambda_{c1}$" représente le coefficient d'échange par rayonnement entre l'air contenu dans la cloche 42 et le premier plateau de pression 20,
- "$\lambda_{c2}$" représente le coefficient d'échange par rayonnement entre l'air contenu dans la cloche 42 et le deuxième plateau de pression 24,
- "$\lambda_{c3prime}$" représente le coefficient d'échange par rayonnement entre l'air contenu dans la cloche 42 et la partie annulaire périphérique 30 du troisième plateau de pression 28,
- "$\lambda_{c3bis}$" représente le coefficient d'échange par rayonnement entre l'air contenu dans la cloche 42 et le moyeu 32 du troisième plateau de pression 28,
- "$\lambda_{c3ter}$" représente le coefficient d'échange par rayonnement entre l'air contenu dans la cloche 42 et la partie 34 de liaison du troisième plateau de pression 28.

Ce coefficient "$\lambda_{ij}$" d'échange par rayonnement thermique est exprimé en $W.K^{-4}$. Il est proportionnel à la surface exposée à l'air de chacun des éléments considérés.

En prenant en compte le rayonnement thermique du premier plateau de pression 20, il est ainsi possible de compléter l'équation "EQ1" développée précédemment. De la manière suivante :

$$(EQ5) : \quad \frac{P_a}{2} = C_1 \cdot \dot{\theta}_1 - \frac{(\theta_c - \theta_1)}{R_{c1}} - \lambda_{1c} \cdot \left( \theta_c^4 - \theta_1^4 \right)$$

dans laquelle $\theta_1$ est la température du premier plateau de pression 20 ;

- $\theta_c$ est la température de l'air contenu dans la cloche 42 ;
- $\dot{\theta}_1$ est la dérivée par rapport au temps de la température du premier plateau de pression 20.

Les termes $C_1 \cdot \dot{\theta}_1$ et $-\dfrac{(\theta_c - \theta_1)}{R_{c1}}$ ont déjà été expliqués précédemment. Le terme $-\lambda_{1c} \cdot \left( \theta_c^4 - \theta_1^4 \right)$ représente la part de puissance restituée à l'air contenu dans la cloche 42 par rayonnement thermique.

Si on applique la relation précédente au cas du double embrayage de la figure 1, on obtient un système d'équations différentielles formant une équation "EQ6" d'état qui peut être formulée sous la forme matricielle suivante :

$$\frac{d}{dt}\begin{Bmatrix} \theta_1^* \\ \theta_2^* \\ \theta_{3prime}^* \\ \theta_{3bis}^* \\ \theta_{3ter}^* \\ \theta_c^* \end{Bmatrix} = [A] \begin{Bmatrix} \theta_1^* \\ \theta_2^* \\ \theta_{3prime}^* \\ \theta_{3bis}^* \\ \theta_{3ter}^* \\ \theta_c^* \end{Bmatrix} + [\lambda] \begin{Bmatrix} \theta_1^{*4} \\ \theta_2^{*4} \\ \theta_{3prime}^{*4} \\ \theta_{3bis}^{*4} \\ \theta_{3ter}^{*4} \\ \theta_c^{*4} \end{Bmatrix} + [B] \begin{Bmatrix} P_1 \\ P_2 \\ \theta_m \\ \theta_{gb} \\ \theta_{ext} \end{Bmatrix}$$

$$(EQ6)$$

dans laquelle les matrices [A] et [B] sont identiques à celles définies dans les premiers modes de réalisation, dans laquelle [$\lambda$] représente une matrice dite de rayonnement qui, pour le présent exemple, s'écrit :

$$[\lambda] = \begin{bmatrix} -\dfrac{\lambda_{1c}}{C_1} & 0 & 0 & 0 & 0 & \dfrac{\lambda_{1c}}{C_1} \\[2ex] 0 & -\dfrac{\lambda_{2c}}{C_2} & 0 & 0 & 0 & \dfrac{\lambda_{2c}}{C_2} \\[2ex] 0 & 0 & -\dfrac{\lambda_{c3\,prime}}{C_{3\,prime}} & 0 & 0 & \dfrac{\lambda_{c3\,prime}}{C_{3\,prime}} \\[2ex] 0 & 0 & 0 & -\dfrac{\lambda_{c3\,bis}}{C_{3\,bis}} & 0 & \dfrac{\lambda_{c3\,bis}}{C_{3\,bis}} \\[2ex] 0 & 0 & 0 & 0 & -\dfrac{\lambda_{c3\,ter}}{C_{3\,ter}} & \dfrac{\lambda_{c3\,ter}}{C_{3\,ter}} \\[2ex] \dfrac{\lambda_{1c}}{C_1} & \dfrac{\lambda_{2c}}{C_2} & \dfrac{\lambda_{c3\,prime}}{C_{3\,prime}} & \dfrac{\lambda_{c3\,bis}}{C_{3\,bis}} & \dfrac{\lambda_{c3\,ter}}{C_{3\,ter}} & \dfrac{-1}{C_c}\left(\lambda_{1c} + \lambda_{2c} + \lambda_{c3\,prime} + \lambda_{c3\,bis} + \lambda_{c3\,ter}\right) \end{bmatrix}$$

Ainsi, lors de la troisième étape "E3" du procédé décrit au premier mode de réalisation, et préalablement à l'opération d'intégration, on effectue la somme des produits suivants :

- le produit de la matrice d'évolution [A] par le vecteur d'état $\{\theta^*\}_{t-1}$ ;
- le produit de la matrice d'excitation [B] par le vecteur d'excitation {U} ;
- le produit de la matrice de rayonnement par le vecteur d'état $\{\theta^*\}_{t-1}$ élevé à la puissance quatre.

Ceci permet de prendre en compte le transfert de chaleur par rayonnement thermique entre chacun des éléments et l'air contenu dans la cloche 42.

L'estimation des variables d'état $\{\theta^*\}_t$ est réalisée en intégrant la somme ainsi obtenue selon le procédé décrit au premier mode de réalisation.

Le procédé ainsi complété et mis en oeuvre par le calculateur 44 numérique permet d'obtenir une estimation plus fiable des températures des différents éléments, notamment à l'arrêt du moteur.

Ce procédé a été appliqué avec une discrétisation du troisième plateau 28. On comprendra cependant que le procédé est aussi applicable en l'absence de discrétisation.

On décrit à présent un troisième mode de réalisation de l'invention qui est une variante du premier mode de réalisation. On ne décrira que les différences par rapport au premier mode de réalisation.

On comprendra que ce troisième mode de réalisation peut être combiné avec le deuxième mode de réalisation.

Pour mettre en oeuvre ce troisième mode de réalisation, un capteur 48 de température a été agencé à l'intérieur de la cloche 42 de manière à mesurer directement la température "$\theta_c$" de l'air contenu dans la cloche 42.

Comme cela est particulièrement visible dans la matrice [A] d'évolution qui a été représentée dans le cadre de la description du premier mode de réalisation, la température "$\theta_c$" de l'air contenu dans la cloche 42 est utilisée pour estimer la température de chacun des éléments du dispositif 16 d'embrayage. Ainsi, le fait de pouvoir utiliser une mesure directe de la température "$\theta_c$" plutôt qu'une estimation approximative permet d'améliorer sensiblement la précision de l'estimation de la température des éléments du dispositif d'embrayage.

En outre, cette mesure permet aussi de diminuer le nombre de calculs à effectuer à chaque cycle d'estimation. Ceci est très important dans le cadre d'un procédé d'estimation en temps réel de températures. En effet, les calculateurs 44 électroniques généralement embarqués à bord des véhicules présentent une puissance de calcul relativement limitée. Le fait de diminuer le nombre de calcul à effectuer permet de raccourcir la durée d'un cycle et ainsi de suivre avec une plus grande fréquence l'évolution de la température.

Pour ce faire, dans ce troisième mode de réalisation, la température "$\theta_c$" n'est plus considérée comme une variable d'état, car elle est connue, mais comme une variable d'excitation. Ainsi, la température de l'air à l'intérieur de la cloche est une valeur qui est collectée lors de la première étape "E1" et qui forme une variable d'excitation thermique.

Par ailleurs, le vecteur d'excitation {U} décrit dans le premier mode de réalisation comportait, outre les puissances thermiques dissipées "$P_a$" et "$P_b$", les températures du moteur "$\theta_m$", de la boîte de vitesses "$\theta_g$" et de l'air environnant "$\theta_{ext}$" contenu dans le compartiment moteur 12. Or ces trois températures "$\theta_m$", "$\theta_g$" et "$\theta_{ext}$" étaient utilisées

uniquement pour l'estimation de la température "$\theta_c$". Cette dernière température étant désormais connue, le vecteur d'excitation {U} ne comporte plus que trois termes : les deux puissances thermiques dissipées "$P_a$" et "$P_b$", et la température "$\theta_c$" de l'air contenu dans la cloche 42.

En prenant en compte ces modifications, le système d'équations décrit dans le premier mode de réalisation s'écrit désormais de la manière réduite suivante :

$$\frac{d}{dt}\begin{Bmatrix} \theta_1^* \\ \theta_2^* \\ \theta_{3prime}^* \\ \theta_{3bis}^* \\ \theta_{3ter}^* \end{Bmatrix} = [A]\begin{Bmatrix} \theta_1^* \\ \theta_2^* \\ \theta_{3prime}^* \\ \theta_{3bis}^* \\ \theta_{3ter}^* \end{Bmatrix} + [B]\begin{Bmatrix} P_1 \\ P_2 \\ \theta_c \end{Bmatrix}$$

(EQ7)

dans laquelle :

$$[A] = \begin{bmatrix} \frac{-1}{C_1}\left(\frac{1}{R_{1-all}}\right) & \frac{1}{C_1 R_{12}} & \frac{1}{C_1 R_{13prime}} & \frac{1}{C_1 R_{13bis}} & \frac{1}{C_1 R_{13ter}} \\[2mm] \frac{1}{C_2 R_{21}} & \frac{-1}{C_2}\left(\frac{1}{R_{2-all}}\right) & \frac{1}{C_2 R_{23prime}} & \frac{1}{C_2 R_{23bis}} & \frac{1}{C_2 R_{23ter}} \\[2mm] \frac{1}{C_{3prime} R_{13prime}} & \frac{1}{C_{3prime} R_{23prime}} & \frac{-1}{C_{3prime}}\left(\frac{1}{R_{3prime-all}}\right) & 0 & \frac{1}{C_{3prime} R_{3ter3prime}} \\[2mm] \frac{1}{C_{3bis} R_{13bis}} & \frac{1}{C_{3bis} R_{23bis}} & 0 & \frac{-1}{C_{3bis}}\left(\frac{1}{R_{3bis-all}}\right) & \frac{1}{C_{3bis} R_{3ter3bis}} \\[2mm] \frac{1}{C_{3ter} R_{13ter}} & \frac{1}{C_{3ter} R_{23ter}} & \frac{1}{C_{3ter} R_{3prime3ter}} & \frac{1}{C_{3ter} R_{3bis3ter}} & \frac{-1}{C_{3ter}}\left(\frac{1}{R_{3ter-all}}\right) \end{bmatrix}$$

et

$$[B] = \begin{vmatrix} \dfrac{1}{2C_1} & 0 & \dfrac{1}{C_1 R_{1c}} \\[2mm] 0 & \dfrac{1}{2C_2} & \dfrac{1}{C_2 R_{2c}} \\[2mm] \dfrac{1}{2C_{3\,prime}} & \dfrac{1}{2C_{3\,prime}} & \dfrac{1}{C_{3\,prime} R_{c3\,prime}} \\[2mm] 0 & 0 & \dfrac{1}{C_{3\,bis} R_{c3\,bis}} \\[2mm] 0 & 0 & \dfrac{1}{C_{3\,ter} R_{c3\,ter}} \end{vmatrix}$$

Ce troisième mode de réalisation permet ainsi d'obtenir des estimations plus précises des températures du vecteur d'état $\{\theta^*\}_t$ avec un cycle raccourci.

Outre les modifications décrites précédemment, le procédé décrit dans le premier mode de réalisation reste entièrement applicable.

On décrit à présent un quatrième mode de réalisation de l'invention en référence à la figure 4. Ce quatrième mode de réalisation est similaire au troisième mode de réalisation car il fait aussi intervenir le capteur 48 de température qui est agencé dans la cloche 42. Néanmoins, la mesure de la température "$\theta_c$" de l'air contenu dans la cloche 42 n'est pas utilisée de la même manière que dans le troisième mode de réalisation.

On a constaté que lorsqu'on appliquait le procédé décrit dans le premier mode de réalisation, l'estimation des températures du vecteur d'état $\{\theta^*\}_t$ au temps "t" ne sont représentatives des températures réelles qu'à condition que les températures du vecteur d'état $\{\theta^*\}_{t-1}$ calculé au temps "t-1" soient elles-mêmes proches des températures réelles.

Or, les procédés d'estimation décrits dans les trois premiers modes de réalisation sont des procédés dits en "boucle ouverte". Ceci signifie qu'on ne dispose pas d'indicateurs permettant de connaître l'écart existant entre les estimations de températures du vecteur d'état et les températures réelles. En l'absence de cette information, l'écart entre les températures réelles et leurs estimations résultant du premier procédé est susceptible d'augmenter au fil des cycles.

Ce quatrième mode de réalisation propose de compléter le procédé du premier mode de réalisation. Le système d'équation "EQ2" défini au premier mode de réalisation est repris dans son intégralité. Il est ici complété par un observateur d'état qui permet de corriger les erreurs d'estimation.

Un tel procédé est basé sur un modèle d'observateur d'état dit "en boucle fermé" qui est représenté à la figure 4.

L'observateur d'états comporte, comme illustré à la figure 4, permet d'établir le système d'équation qui est formé de l'équation "EQ2" telle qu'elle est définie au premier mode de réalisation et d'une équation "EQ8":

$$(EQ2) \quad \left\{ \begin{array}{l} \left\{\dfrac{d\theta^*}{dt}\right\} = [A] \cdot \{\theta^*\} + [B] \cdot \{U\} \\[4mm] \{Y^*\} = [C] \cdot \{\theta^*\} + [D] \cdot \{U\} \end{array} \right.$$

$(EQ8)$

dans laquelle les termes de l'équation "EQ2" sont identiques à ceux qui ont été définis dans le premier mode de réalisation, et dans laquelle :

- $\{Y^*\}$ est un vecteur de données de sortie contenant une estimation des variables d'état susceptibles d'être mesurées directement, le vecteur {Y*} contenant ici uniquement la température "$\theta^{*}_{c}$" de l'air à l'intérieur de la cloche 42 ;
- [C] est une matrice d'observation qui permet d'estimer les valeurs du vecteur {Y*} à partir du vecteur {$\theta^{*}$} des variables d'état estimées ;
- [D] est une matrice d'action directe qui permet de prendre en compte l'influence du vecteur d'excitation {U} sur le vecteur de données de sortie {Y*}.

Dans le présent exemple, le vecteur {Y*} de données de sortie comportant uniquement la température "$\theta^{*}_{c}$" de l'air à l'intérieur de la cloche 42, les matrice [C] et [D] s'écrivent de la manière suivante :

$$[C] = [0\ 0\ 0\ 0\ 0\ 1]$$

et

$$[D] = [0\ 0\ 0\ 0\ 0].$$

L'équation "EQ2" peut être reformulée en intégrant des moyens de correction qui corrigent l'estimation {$\theta^{*}$} suivante des variables d'état en soustrayant, au moyen d'un comparateur, le produit d'une matrice de gain de correction [L] par la différence entre les données de sortie effectivement mesurées {Y} et les données de sortie estimées correspondantes {Y*}. Ainsi l'équation "EQ2" devient l'équation "EQ9" suivante :

$$(EQ9) : \left\{\frac{d\theta^{*}}{dt}\right\} = [A]\cdot\{\theta^{*}\} + [B]\cdot\{U\} + [L]\cdot\left(\{Y\} - \{Y^{*}\}\right)$$

La différence entre les données de sortie mesurées {Y} et les données de sortie estimées correspondantes {Y*} est appelée "erreur d'estimation". Il s'agit ici de la différence entre :

- la température "$\theta_{c}$" mesurée par le capteur 48 de température et
- la température "$\theta^{*}_{c}$" du vecteur d'état {$\theta^{*}$}$_{t-1}$ estimée au cycle précédent.

Le choix des termes de la matrice de gain de correction [L] est effectué de manière que l'erreur d'estimation entre le vecteur de données de sortie mesurées {Y} et le vecteur de données de sortie estimées {Y*} converge vers zéro dans un laps de temps fini.
Ceci peut par exemple être réalisé en choisissant une matrice de gain de correction [L] de manière que les valeurs propres de la matrice [A-LC] présentent des parties réelles négatives. On obtient ainsi une convergence asymptotique négative vers zéro de l'erreur d'estimation.
Dans le présent exemple, en posant

$$[L]^{T} = [l1\ l2\ l3\ l4\ l5\ l6]$$

la matrice [A-LC] s'écrit de la manière suivante :

$$[A-L\cdot C]=\begin{bmatrix} \dfrac{-1}{C_1}\left(\dfrac{1}{R_{1-all}}\right) & \dfrac{1}{C_1 R_{12}} & \dfrac{1}{C_1 R_{13prime}} & \dfrac{1}{C_1 R_{13bis}} & \dfrac{1}{C_1 R_{13ter}} & \dfrac{1}{C_1 R_{1c}} - l_1 \\[2ex] \dfrac{1}{C_2 R_{21}} & \dfrac{-1}{C_2}\left(\dfrac{1}{R_{2-all}}\right) & \dfrac{1}{C_2 R_{23prime}} & \dfrac{1}{C_2 R_{23bis}} & \dfrac{1}{C_2 R_{23ter}} & \dfrac{1}{C_2 R_{2c}} - l_2 \\[2ex] \dfrac{1}{C_{3prime} R_{13prime}} & \dfrac{1}{C_{3prime} R_{23prime}} & \dfrac{-1}{C_{3prime}}\left(\dfrac{1}{R_{3prime-all}}\right) & \dfrac{1}{C_{3prime} R_{3bis3prime}} & \dfrac{1}{C_{3prime} R_{3ter3prime}} & \dfrac{1}{C_{3prime} R_{c3prime}} - l_3 \\[2ex] \dfrac{1}{C_{3bis} R_{13bis}} & \dfrac{1}{C_{3bis} R_{23bis}} & \dfrac{1}{C_{3bis} R_{3prime3bis}} & \dfrac{-1}{C_{3bis}}\left(\dfrac{1}{R_{3bis-all}}\right) & \dfrac{1}{C_{3bis} R_{3ter3bis}} & \dfrac{1}{C_{3bis} R_{c3bis}} - l_4 \\[2ex] \dfrac{1}{C_{3ter} R_{13ter}} & \dfrac{1}{C_{3ter} R_{23ter}} & \dfrac{1}{C_{3ter} R_{3prime3ter}} & \dfrac{1}{C_{3ter} R_{3bis3ter}} & \dfrac{-1}{C_{3ter}}\left(\dfrac{1}{R_{3ter-all}}\right) & \dfrac{1}{C_{3ter} R_{c3ter}} - l_5 \\[2ex] \dfrac{1}{C_c R_{c1}} & \dfrac{1}{C_c R_{c2}} & \dfrac{1}{C_c R_{c3prime}} & \dfrac{1}{C_c R_{c3bis}} & \dfrac{1}{C_c R_{c3ter}} & \dfrac{-1}{C_c}\left(\dfrac{1}{R_{c-all}}\right) - l_6 \end{bmatrix}$$

Pour pouvoir utiliser ce modèle dans un calculateur 44 numérique, l'équation d'état "EQ9" précédente est discrétisée pour passer d'une équation d'état à temps continu à une équation d'état à temps échantillonné, comme expliqué au premier mode de réalisation.

Le procédé mis en oeuvre par le calculateur 44 numérique est similaire à celui déjà décrit dans le premier mode de réalisation. Seules les différences seront décrites par la suite.

Lors de la première étape "E1", les valeurs de variables d'excitation thermique du vecteur d'excitation {U} et les valeurs du vecteur de données de sortie mesurée {Y} sont simultanément collectées. Ainsi, le calculateur 44 attribue au vecteur de données de sortie {Y} la valeur mesurée par le capteur 48 de température.

La deuxième étape "E2"du procédé demeure inchangée.

Ensuite, lors de la troisième étape "E3" d'estimation de variables d'état thermique du vecteur d'état $\{\theta^*\}_t$ du dispositif d'embrayage 16, l'estimation des variables d'état pour le temps actuel "t" est réalisée en prenant en compte le terme de correction tel qu'il est défini dans l'équation "EQ9".

Du fait du plus grand nombre de calculs un cycle sera plus long que pour le procédé selon le troisième mode de réalisation. Néanmoins, le terme de correction incorporé dans l'équation "EQ9" permet d'obtenir un résultat sensiblement plus précis pour les valeurs estimées du vecteur d'état $\{\theta^*\}$.

On comprendra que ce quatrième mode de réalisation peut être combiné avec le deuxième mode de réalisation.

L'invention a été décrite en application à un double embrayage 17, 19. On comprendra qu'elle est applicable à d'autres types de dispositif d'embrayage, et notamment à des dispositifs d'embrayage simples ne comportant qu'un unique embrayage.

## Revendications

1. Procédé d'estimation en temps réel de la température ($\{\theta\}$) d'éléments d'un dispositif d'embrayage à friction (16) de véhicule automobile qui est destiné à être mis en oeuvre par un calculateur (44) numérique, le dispositif d'embrayage (16) étant susceptible d'accoupler un arbre moteur (15) et au moins un arbre d'entrée (22, 26) de boîte de vitesses (18), le dispositif d'embrayage (16) comportant plusieurs composants monoblocs dont :

   - au moins deux plateaux de pression (20, 24, 28) destinés à serrer au moins un disque de friction (38, 40) entraînés en rotation par l'arbre moteur (15) ;
   - une cloche (42) qui renferme les plateaux de pression (20, 24, 28) ;

   le procédé comportant :

- une première étape (E1) de collecte de valeurs de variables d'excitation thermique ({U}) ;
- une deuxième étape (E2) de calcul de la puissance thermique ($P_a$, $P_b$) dissipée par frottement ;
- une troisième étape (E3) d'estimation de variables d'état thermique ({$\theta$}) du dispositif d'embrayage (16), l'estimation des variables d'état ({$\theta$}$_t$) étant réalisée en intégrant au moins la somme du produit d'une matrice d'évolution ([A]) par un vecteur d'état ({$\theta$}$_{t-1}$) comportant les valeurs des variables d'état estimées précédemment et du produit d'une matrice d'excitation ([B]) par un vecteur d'excitation ({U}) comportant les valeurs des variables d'excitation collectées lors de la première étape (E1) ;

**caractérisé en ce qu'**au moins un composant (28) monobloc est discrétisé en au moins deux éléments (30, 32, 34) distincts contigus, la température ($\theta_{3prime}$, $\theta_{3bis}$, $\theta_{3ter}$) de chacun desdits éléments (30, 32, 34) de discrétisation formant une variable d'état qui est estimée lors de la troisième étape (E3).

2. Procédé selon la revendication précédente, **caractérisé en ce que** les termes de la matrice d'évolution ([A]) sont calculés en prenant en considération la puissance thermique emmagasinée par les éléments (30, 32, 34) de discrétisation notamment en fonction de leur masse, la puissance thermique transmise à l'air environnant et la conduction thermique entre les deux éléments (30, 32, 34) de discrétisation.

3. Procédé selon l'une quelconque des revendications précédentes, **caractérisé en ce qu'**au moins un plateau (28) de pression est discrétisé en au moins deux éléments (30, 32, 34) de discrétisation.

4. Procédé selon la revendication précédente, **caractérisé en ce qu'**un premier élément de discrétisation du plateau (28) de pression est formé par la partie annulaire périphérique (30) portant les faces de contact avec des garnitures de friction.

5. Procédé selon l'une quelconque des revendications 3 ou 4, **caractérisé en ce que** le plateau (28) de pression comporte un moyeu (32) central, et **en ce qu'**un deuxième élément de discrétisation est formé par le moyeu (32) du plateau (28) de pression.

6. Procédé selon la revendication précédente prise en combinaison avec la revendication 4, **caractérisé en ce qu'**un troisième élément de discrétisation du plateau (28) de pression est formé par une partie (34) de liaison entre la partie annulaire périphérique (30) et le moyeu (32) du plateau (28) de pression.

7. Procédé selon l'une quelconque des revendications précédentes, **caractérisé en ce qu'**au moins un disque de friction est discrétisé en plusieurs éléments de discrétisation.

8. Procédé selon l'une quelconque des revendications précédentes, **caractérisé en ce qu'**au moins le couvercle est discrétisé en plusieurs éléments de discrétisation.

9. Procédé selon l'une quelconque des revendications précédentes, **caractérisé en ce que**, lors de la troisième étape (E3) et préalablement à l'opération d'intégration, à la somme du produit d'une matrice d'évolution ([A]) par le vecteur d'état ({$\theta$}$_{t-1}$) et du produit d'une matrice d'excitation ([B]) par le vecteur d'excitation ({U}), on ajoute le produit d'une matrice ([$\lambda$]) de rayonnement par le vecteur d'état ({$\theta$}$_{t-1}$) élevé à la puissance quatre, afin de prendre en compte le transfert de chaleur par rayonnement thermique entre chacun des éléments et l'air contenu dans la cloche, et **en ce que** l'estimation des variables d'état ({$\theta$}$_t$) est réalisée en intégrant la somme ainsi obtenue.

10. Procédé selon l'une quelconque des revendications précédentes, **caractérisé en ce qu'**un capteur (48) thermique est agencé dans la cloche (42) de manière à mesurer la température ($\theta_c$) de l'air à l'intérieur de la cloche (42).

11. Procédé selon la revendication précédente, **caractérisé en ce que** la température ($\theta_c$) de l'air à l'intérieur de la cloche (42) est une valeur qui est collectée lors de la première étape (E1) et qui forme une variable d'excitation thermique ({U}).

12. Procédé selon la revendication 10, **caractérisé en ce que** la troisième étape comporte, avant l'opération d'intégration, une opération de correction qui corrige l'estimation précédente ({$\theta$}$_{t-1}$) des variables d'état en soustrayant le produit d'une matrice de correction (L) par la différence entre la température ($\theta_c$) mesurée de l'air à l'intérieur de la cloche (42) et la température ($\theta^*_c$) estimée de l'air à l'intérieur de la cloche (42).

13. Procédé selon l'une quelconque des revendications précédentes, **caractérisé en ce que** le dispositif d'embrayage (16) est un double embrayage (17, 19) qui comporte trois plateaux de pression (20, 24, 28) et deux disques de friction (38, 40) susceptibles d'être serrés indépendamment l'un de l'autre entre les plateaux pour entraîner en rotation chacun un arbre associé d'entrée (22, 26) de la boîte de vitesses (18).

14. Procédé de pilotage d'un embrayage mettant en oeuvre le procédé d'estimation selon l'une quelconque des revendications précédentes, **caractérisé en ce qu'il** comporte une étape de modification de la commande du dispositif d'embrayage en fonction des températures estimées.

15. Procédé de pilotage d'un embrayage mettant en oeuvre le procédé d'estimation selon l'une quelconque des revendications précédentes, **caractérisé en ce qu'il** comporte :

   - une première étape de calcul d'un gradient de température du composant discrétisé à partir des températures estimées de chacun des éléments de discrétisation ;
   - une deuxième étape de calcul des déformations mécaniques du composant discrétisé dues aux contraintes provoquées par le gradient de température.

16. Procédé selon la revendication précédente, **caractérisé en ce qu'il** comporte une troisième étape de modification de la commande du dispositif d'embrayage en fonction des déformations calculées.

**Patentansprüche**

1. Verfahren zum Schätzen in Echtzeit der Temperatur ($\{\theta\}$) von Elementen einer Reibungskupplungsvorrichtung (16) eines Kraftfahrzeugs, das dazu bestimmt ist, von einem digitalen Rechner (44) ausgeführt zu werden, wobei die Kupplungsvorrichtung (16) eine Motorwelle (15) und wenigstens eine Eingangswelle (22, 26) eines Schaltgetriebes (18) koppeln kann, wobei die Kupplungsvorrichtung (16) mehrere Monoblockkomponenten umfasst, darunter:

   - wenigstens zwei Druckplatten (20, 24, 28), die dazu bestimmt sind, wenigstens an eine Reibungsscheibe (38, 40) angepresst zu werden, und durch die Motorwelle (15) rotatorisch angetrieben werden;
   - eine Glocke (42), die die Druckplatten (20, 24, 28) umschließt;

   wobei das Verfahren Folgendes umfasst:

   - einen ersten Schritt (E1) des Sammelns von Werten von Variablen einer thermischen Erregung ($\{U\}$);
   - einen zweiten Schritt (E2) des Berechnens der thermischen Leistung ($P_a$, $P_b$, die durch Reibung abgeführt wird;
   - einen dritten Schritt (E3) des Schätzens von thermischen Zustandsvariablen ($\{\theta\}$) der Kupplungsvorrichtung (16), wobei das Schätzen der Zustandsvariablen ($\{\theta\}_t$) durch Integrieren wenigstens der Summe des Produkts aus einer Entwicklungsmatrix ($\{A\}$) mit einem Zustandsvektor ($\{\theta\}_{t-1}$), der die Werte der vorher geschätzten Zustandsvariablen enthält, und des Produkts einer Erregungsmatrix ([B]) mit einem Erregungsvektor ($\{U\}$), der die Werte der während des ersten Schrittes (E1) gesammelten Erregungsvariablen enthält, ausgeführt wird;

   **dadurch gekennzeichnet, dass** wenigstens eine Monoblockkomponente (28) in wenigstens zwei aneinander grenzende verschiedene Elemente (30, 32, 34) diskretisiert ist, wobei die Temperatur ($\theta_{3prime}$, $\theta_{3bis}$, $\theta_{3ter}$) jedes der Diskretisierungselemente (30, 32, 34) eine Zustandsvariable bildet, die während des dritten Schrittes (E3) geschätzt wird.

2. Verfahren nach dem vorhergehenden Anspruch, **dadurch gekennzeichnet, dass** die Ausdrücke der Entwicklungsmatrix ([A]) unter Berücksichtigung der von den Diskretisierungselementen (30, 32, 34) gespeicherten thermischen Leistung insbesondere als Funktion ihrer Masse, der an die Umgebungsluft übertragenen thermischen Leistung und der thermischen Leitung zwischen den zwei Diskretisierungselementen (30, 32, 34) berechnet werden.

3. Verfahren nach einem der vorhergehenden Ansprüche, **dadurch gekennzeichnet, dass** wenigstens eine Druckplatte (28) in wenigstens zwei Diskretisierungselemente (30, 32, 34) diskretisiert ist.

4. Verfahren nach dem vorhergehenden Anspruch, **dadurch gekennzeichnet, dass** ein erstes Diskretisierungselement der Druckplatte (28) durch den Umfangsringteil (30) gebildet ist, der die Kontaktflächen mit den Reibungsbelägen trägt.

**5.** Verfahren nach einem der Ansprüche 3 oder 4, **dadurch gekennzeichnet, dass** die Druckplatte (28) eine Mittelnabe (32) aufweist und dass ein zweites Diskretisierungselement durch die Nabe (32) der Druckplatte (28) gebildet ist.

**6.** Verfahren nach dem vorhergehenden Anspruch, wenn abhängig von Anspruch 4, **dadurch gekennzeichnet, dass** ein drittes Diskretisierungselement der Druckplatte (28) durch einen Verbindungsteil (34) zwischen dem Umfangsringteil (30) und der Nabe (32) der Druckplatte (28) gebildet ist.

**7.** Verfahren nach einem der vorhergehenden Ansprüche, **dadurch gekennzeichnet, dass** wenigstens eine Reibungsscheibe in mehrere Diskretisierungselemente diskretisiert ist.

**8.** Verfahren nach einem der vorhergehenden Ansprüche, **dadurch gekennzeichnet, dass** wenigstens der Deckel in mehrere Diskretisierungselemente diskretisiert ist.

**9.** Verfahren nach einem der vorhergehenden Ansprüche, **dadurch gekennzeichnet, dass** in dem dritten Schritt (E3) und vor der Integrationsoperation an der Summe des Produkts aus einer Entwicklungsmatrix ([A]) mit dem Zustandsvektor ($\{\theta\}_{t-1}$) und des Produkts einer Erregungsmatrix ([B]) mit dem Erregungsvektor ($\{U\}$) das Produkt einer Strahlungsmatrix ([$\lambda$]) mit dem Zustandsvektor ($\{\theta\}_{t-1}$), erhoben zur vierten Potenz, hinzugefügt wird, um die Wärmeübertragung durch thermische Strahlung zwischen jedem der Elemente und der in der Glocke enthaltenen Luft zu berücksichtigen, und dass die Schätzung der Zustandsvariablen ($(\theta)_t$) durch Integrieren der so erhaltenen Summe verwirklicht wird.

**10.** Verfahren nach einem der vorhergehenden Ansprüche, **dadurch gekennzeichnet, dass** ein thermischer Sensor an der Glocke (42) angeordnet ist, derart, dass er die Temperatur ($\{\theta\}_c$) der Luft innerhalb der Glocke (42) messen kann.

**11.** Verfahren nach dem vorhergehenden Anspruch, **dadurch gekennzeichnet, dass** die Temperatur ($\{\theta\}_c$) der Luft innerhalb der Glocke (42) ein Wert ist, der im ersten Schritt (E1) gesammelt wird und der eine Variable ($\{U\}$) der thermischen Erregung bildet.

**12.** Verfahren nach Anspruch 10, **dadurch gekennzeichnet, dass** der dritte Schritt vor der Integrationsoperation eine Korrekturoperation umfasst, die die vorhergehende Schätzung ($\{\theta\}_{t-1}$) der Zustandsvariablen durch Subtrahieren des Produkts einer Korrekturmatrix (L) mit der Differenz zwischen der gemessenen Temperatur ($\{\theta\}_c$) der Luft innerhalb der Glocke (42) und der geschätzten Temperatur ($\theta^*_c$) der Luft innerhalb der Glocke (42) korrigiert.

**13.** Verfahren nach einem der vorhergehenden Ansprüche, **dadurch gekennzeichnet, dass** die Kupplungsvorrichtung (16) eine Doppelkupplung (17, 19), die drei Druckplatten (20, 24, 28) und zwei Reibungsscheiben (38, 40), die unabhängig voneinander zwischen den Platten angepresst werden können, um jeweils eine Welle, die dem Eingang (22, 26) des Schaltgetriebes (18) zugeordnet ist, rotatorisch anzutreiben, umfasst.

**14.** Verfahren zum Steuern einer Kupplung, das das Schätzverfahren nach einem der vorhergehenden Ansprüche ausführt, **dadurch gekennzeichnet, dass** es einen Schritt des Modifizierens der Steuerung der Kupplungsvorrichtung als Funktion der geschätzten Temperaturen umfasst.

**15.** Verfahren zum Steuern einer Kupplung, das das Schätzverfahren nach einem der vorhergehenden Ansprüche ausführt, **dadurch gekennzeichnet, dass** es Folgendes umfasst:

- einen ersten Schritt des Berechnens eines Temperaturgradienten der diskretisierten Komponente anhand der geschätzten Temperaturen jedes der Diskretisierungselemente;
- einen zweiten Schritt des Berechnens der mechanischen Verformungen der diskretisierten Komponente, die durch Beanspruchungen bedingt sind, die durch den Temperaturgradienten hervorgerufen werden.

**16.** Verfahren nach dem vorhergehenden Anspruch, **dadurch gekennzeichnet, dass** es einen dritten Schritt des Modifizierens der Steuerung der Kupplungsvorrichtung als Funktion der berechneten Verformungen umfasst.

**Claims**

**1.** Method for real-time estimation of the temperature ($\{\theta\}$) of elements of a friction clutch device (16) of a motor vehicle which is intended to be implemented by a digital computer (44), the clutch device (16) being likely to couple an engine shaft (15) and at least one input shaft (22, 26) of a gear box (18), the clutch device (16) comprising a number of one-piece components including:

- at least two pressure plates (20, 24, 28) intended to grip at least one friction disc (38, 40) driven in rotation by the engine shaft (15);
- a bell housing (42) enclosing the pressure plates (20, 24, 28);

the method comprising:

- a first step (E1) of collection of values of thermal excitation variables ($\{U\}$);
- a second step (E2) of computation of the thermal power ($P_a$, $P_b$) dissipated by friction;
- a third step (E3) of estimation of the thermal state variables ($\{\theta\}$) of the clutch device (16), the estimation of the state variables ($\{\theta\}_t$) being produced by integrating at least the sum of the product of a trend matrix ([A]) by a state vector ($\{\theta\}_{t-10}$ comprising the values of the state variables estimated previously and of the product of an excitation matrix ([B]) by an excitation vector ($\{U\}$) comprising the values of the excitation variables collected in the first step (E1) ;

**characterized in that** at least one one-piece component (28) is discretized into at least two contiguous distinct elements (30, 32, 34), the temperature ($\theta_{3first}$, $\theta_{3a}$, $\theta_{3b}$) of each of said discretization elements (30, 32, 34) forming a state variable which is estimated in the third step (E3).

2. Method according to the preceding claim, **characterized in that** the terms of the trend matrix ([A]) are computed by taking into account the thermal power stored by the discretization elements (30, 32, 34) notably as a function of their weight, the thermal power transmitted to the surrounding air and the thermal conduction between the two discretization elements (30, 32, 34).

3. Method according to any one of the preceding claims, **characterized in that** at least one pressure plate (28) is discretized into at least two discretization elements (30, 32, 34).

4. Method according to the preceding claim, **characterized in that** a first discretization element of the pressure plate (28) is formed by the peripheral annular part (30) bearing the faces of contact with friction linings.

5. Method according to any one of Claims 3 or 4, **characterized in that** the pressure plate (28) comprises a central hub (32), and **in that** a second discretization element is formed by the hub (32) of the pressure plate (28).

6. Method according to the preceding claim taken in combination with Claim 4, **characterized in that** a third discretization element of the pressure plate (28) is formed by a link part (34) between the peripheral annular part (30) and the hub (32) of the pressure plate (28).

7. Method according to any one of the preceding claims, **characterized in that** at least one friction disc is discretized into a plurality of discretization elements.

8. Method according to any one of the preceding claims, **characterized in that** at least the cover is discretized into a plurality of discretization elements.

9. Method according to any one of the preceding claims, **characterized in that**, in the third step (E3) and prior to the integration operation, to the sum of the product of a trend matrix ([A]) by the state vector ($\{\theta\}_{t-1}$ and of the product of an excitation matrix ([B]) by the excitation vector ($\{U\}$), there is added the product of a radiation matrix ([λ]) by the state vector ($\{\theta\}_{t-1}$) raised to the power of four, in order to take into account the heat transfer by thermal radiation between each of the elements and the air contained in the bell housing, and **in that** the estimation of the state variables ($\{\theta\}_t$) is produced by integrating the duly obtained sum.

10. Method according to any one of the preceding claims, **characterized in that** a thermal sensor (48) is arranged in the bell housing (42) so as to measure the temperature ($\theta_c$) of the air inside the bell housing (42).

11. Method according to the preceding claim, **characterized in that** the temperature ($\theta_c$) of the air inside the bell housing (42) is a value which is collected in the first step (E1) and which forms a thermal excitation variable ($\{U\}$).

12. Method according to Claim 10, **characterized in that** the third step comprises, before the integration operation, a correction operation which corrects the preceding estimation ($\{\theta\}_{t-1}$) of the state variables by subtracting the product of a correction matrix (L) by the difference between the measured temperature ($\theta_c$) of the air inside the bell housing (42) and the estimated temperature ($\theta^*_c$) of the air inside the bell housing (42).

13. Method according to any one of the preceding claims, **characterized in that** the clutch device (16) is a double clutch (17, 19) which comprises three pressure plates (20, 24, 28) and two friction discs (38, 40) likely to be gripped independently of one another between the plates to each drive the rotation of an associated input shaft (22, 26) of the gear box (18).

14. Method for controlling a clutch implementing the estimation method according to any one of the preceding claims, **characterized in that** it comprises a step of modification of the control of the clutch device as a function of the estimated temperatures.

15. Method for controlling a clutch implementing the estimation method according to any one of the preceding claims, **characterized in that** it comprises:

    - a first step of computation of a temperature gradient of the discretized component from the estimated temperatures of each of the discretization elements;
    - a second step of computation of the mechanical deformations of the discretized component due to the stresses provoked by the temperature gradient.

16. Method according to the preceding claim, **characterized in that** it comprises a third step of modification of the control of the clutch device as a function of the computed deformations.

**Fig. 1**

**Fig. 2**

**Fig. 3**

**Fig. 4**

**RÉFÉRENCES CITÉES DANS LA DESCRIPTION**

**Documents brevets cités dans la description**

- FR 2936034 A1